# EUROPÄISCHE PATENTSCHRIFT

(11) **EP 3 283 230 B1**
(45) Veröffentlichungstag und Bekanntmachung des Hinweises auf die Patenterteilung: **18.08.2021**
(21) Anmeldenummer: 16719323.4
(22) Anmeldetag: 15.04.2016
(51) Int. Cl.: B05B 13/04, B25J 19/00, B05B 15/652, B05B 12/04, B05B 1/16

(54) **VORRICHTUNG ZUM AUFTRAGEN VON FLUIDEN**
DEVICE FOR APPLYING FLUIDS
DISPOSITIF D'APPLICATION DE FLUIDES

(30) Priorität: 16.04.2015 EP 15163897
(43) Veröffentlichungstag der Anmeldung: 21.02.2018
(73) Patentinhaber: Eftec Europe Holding AG, 6301 Zug (CH)
(72) Erfinder: MÜLLER, Martin, 88048 Friedrichshafen (DE)
(74) Vertreter: Hepp Wenger Ryffel AG
(86) Internationale Anmeldenummer: PCT/EP2016/058426
(87) Internationale Veröffentlichungsnummer: WO 2016/166333

(56) Entgegenhaltungen:
- EP-A1- 1 521 642
- EP-A1- 1 579 964
- EP-A2- 1 232 799
- WO-A2-2008/109765
- DE-A1- 10 103 067
- DE-A1-102013 008 312
- DE-A1-102013 013 038
- US-A- 5 747 894

## Beschreibung

Die Erfindung betrifft eine Vorrichtung zum Auftragen von Fluiden, ein Verfahren zum Auftragen von Fluiden, ein Verfahren zum Umrüsten von elektrischen Koppelstellen sowie die Verwendung einer Koppelstelle mit induktiven Kopplungseinheiten gemäss den Oberbegriffen der unabhängigen Ansprüche.

Vorrichtungen zum Aufragen von Fluiden können drehbare Bauteile enthalten, die herkömmlicherweise über Schleifkontakte elektrisch versorgt und gesteuert werden. Diese Schleifkontakte ermöglichen dabei die Drehbarkeit beispielsweise eines Sprühkopfes mit Düsen zum Auftragen der Flüssigkeit. Die Drehbarkeit des Kopfes ermöglicht dabei eine Positionierung der Düsen in Abhängigkeit von der Anwendungsspezifikation.

Eine solche Vorrichtung ist beispielsweise aus EP 1 521 642 bekannt. Die Vorrichtung weist einen rotierenden Düsenkopf auf, der über Schleifkontakte elektrisch versorgt wird und mit einem Halteteil verbunden ist. Kanäle, welche durch ein Drehlager und innerhalb des rotierenden Kopfes führen, ermöglichen die Zuleitung des Fluids vom Halteteil zum rotierenden Düsenkopf.

Solche Vorrichtungen haben jedoch den Nachteil, dass aufgrund der baulichen Beschaffenheit der Schleifkontakte die Anzahl von Übertragungskanälen beschränkt ist und die Übertragung von Sensor- und Steuersignalen fehleranfällig ist. Des Weiteren sind die Schleifkontakte anfällig für Verschmutzungen, verschleissen schnell und haben daher einen hohen Wartungsaufwand.

Es ist daher eine Aufgabe der vorliegenden Erfindung, die Nachteile des Standes der Technik zu überwinden.

Insbesondere ist es eine Aufgabe der Erfindung, eine Vorrichtung zum Auftragen von Fluiden bereitzustellen, bei der elektrische Energie und Signale präzise und mit einfachen Mitteln sowie ohne hohen Platzbedarf über Koppelstellen übertragen werden können. Zudem soll eine kostengünstige, möglichst wenig störanfällige und wartungsarme Vorrichtung mit einer langen Lebensdauer geschaffen werden.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Die Erfindung betrifft eine Vorrichtung zum Auftragen von Fluiden und zum Anbringen als Werkzeug an einen Roboterarm. Die Vorrichtung umfasst ein statisches Element, ein drehbares Element und eine Koppelstelle. Die Koppelstelle verbindet das statische Element und das drehbare Element drehbar miteinander. Die Koppelstelle verfügt sowohl auf der Seite des statischen Elements als auch auf der Seite des drehbaren Elements über induktive Kopplungselemente. Die Kopplungselemente sind derart angeordnet, dass eine induktive Energie- und/oder Signalübertragung über die Koppelstelle hinweg ermöglicht ist.

Als Fluid sind Substanzen zu verstehen, die Fliesseigenschaften aufweisen, wie beispielsweise Flüssigkeiten, Gase, Wachse sowie bestimmte plastische Verbindungen. Bevorzugt handelt es sich bei dem Fluid um ein bei einem Druck von 20 bis 250 bar und einer Temperatur von 20° bis 100° C pumpbares Fluid, wie beispielsweise Beschichtungsmassen oder Klebstoffe für den Automobilbau.

Es ist möglich, dass das statische Element der Vorrichtung über eine seiner Stirnflächen an den Roboterarm anschraubbar ist. Jeweils ein induktives Kopplungselement des statischen Elements und ein induktives Kopplungselement des drehbaren Elements sind relativ zueinander drehbar um eine gemeinsame Achse angeordnet. Das drehbare Element kann um mehr als 360° relativ zum statischen Element rotieren. Es ist auch möglich, dass sowohl das statische Element als auch das drehbare Element über ein energieversorgendes Element, beispielsweise eine Powerspule, verfügen. Die Energieübertragung kann dabei vom statischen Element auf das drehbare Element über eine gemeinsame Koppelstelle erfolgen.

Die induktiven Kopplungselemente der Koppelstelle ermöglichen eine schnelle und störungsfreie Energie- und Signalübertragung. Die Übertragung beliebig vieler Signale ist möglich. Die Verwendung von Kabeln, die die Drehbarkeit des drehbaren Elements einschränken können, entfällt. Die Lebensdauer solcher induktiven Kopplungseinheiten ist gegenüber herkömmlichen Schleifkontakten deutlich erhöht und weniger wartungsintensiv, die Kosten werden somit verringert.

Vorzugsweise umfassen die induktiven Kopplungselemente Flachspulen, insbesondere mit Ferritkernen. Die Koppelstelle kann beispielsweise sechs solcher Flachspulen umfassen, wobei jeweils drei im drehbaren Element und drei im statischen Element angeordnet sein können. Flachspulen mit Ferritkernen sind dem Fachmann als Mittel zur induktiven Übertragung von Signalen bekannt. Vorzugsweise liegen sich jeweils eine Flachspule des statischen Elements und eine Flachspule des drehbaren Elements in einem sehr geringen Abstand elektrisch kontaktlos und berührungslos gegenüber. Typischerweise beträgt ein solcher Abstand wenige Millimeter, beispielsweise 2 mm. Die Flachspulen können in den Stirnflächen der jeweiligen Elemente, an denen sich die Koppelstelle befindet, eingebracht sein.

Flachspulen mit Ferritkernen zeichnen sich durch ihren geringen Platzbedarf und ihre hohe Leistungsfähigkeit aus. Sie sind kostengünstig und lassen sich leicht in Bauteile integrieren. Auch lassen sich bereits bestehende elektrische Koppelstellen von Bauteilen, beispielsweise Schleifkontakte, leicht durch solche Flachspulen ersetzen.

Das statische Element kann eine signal- und/oder datenverarbeitende Elektronik zur Umwandlung von digitalen Signalen in analoge Signale und/oder analoge Signale in digitale Signale umfassen. Das drehbare Element kann eine signal- und/oder datenverarbeitende Elektronik zur Umwandlung von digitalen Signalen in analoge Signale und/oder analoge Signale in digitale Signale umfassen.

Beispielsweise kann die signal- und /oder datenverarbeitende Elektronik des drehbaren Elements und/oder des statischen Elements einen auf einer Platine angeordneten Mikroprozessor umfassen. Es ist auch denkbar, dass die signal- und/oder datenverarbeitende Elektronik einen Prozessor, einen Demodulator und/oder Modulator umfasst.

Durch die integrierte signal- und/oder datenverarbeitende Elektronik wird eine schnelle und präzise Übertragung von Signalen und/oder Daten ermöglicht. Der Datenstrom wird reduziert.

Die signal- und/oder datenverarbeitende Elektronik kann in dem statischen Element und dem drehbaren Element derart ausgebildet und aufeinander abgestimmt sein, dass eine serielle Übertragung von Signalen und/oder Daten ermöglicht ist. Es ist auch denkbar, dass zwischen dem statischen Element und dem drehbaren Element eine parallele Datenübertagung möglich ist.

Eine serielle Datenübertragung stellt eine störsichere Übertragung dar und minimiert die für die Signal- und Datenübertragung erforderlichen Leitungen.

Vorzugsweise ist die Übertragung von Signalen zwischen dem statischen Element und dem drehbaren Element bidirektional ermöglicht, insbesondere über jeweils miteinander korrespondierende Kopplungselemente im statischen Element und drehbaren Element für jeweils nur eine Übertragungsrichtung.

Unter bidirektional ist die Übertragung von Signalen und Daten sowohl vom statischen Element auf das drehbare Element als auch von dem drehbaren Element auf das statische Element zu verstehen. Es ist denkbar, dass ein korrespondierendes Paar Kopplungselemente eine Energieübertragung vom statischen Element auf das drehbare Element ermöglicht. Ein weiteres korrespondierendes Paar Kopplungselemente überträgt Signale und/oder Daten von dem statischen Element auf das drehbare Element und ein anderes Paar Kopplungselemente überträgt die Signale und/oder Daten in die andere Übertragungsrichtung. Vorzugsweise können in der Koppelstelle somit drei korrespondierende Paare von Kopplungselementen angeordnet sein.

Ein Vorteil der bidirektionalen Übertragung von Daten besteht darin, dass eine direkte Auswertung sowie Verarbeitung der Signale bereits innerhalb der Vorrichtung ermöglicht wird, die Reaktionszeiten verkürzen sich. Daraus resultiert eine höhere Leistungsfähigkeit der Vorrichtung.

Mindestens ein induktives Kopplungselement kann mit einem Mikroprozessor in einer gemeinsamen Kapsel eingeschlossen sein. Die Kapsel kann beispielsweise aus einem Kunststoff gefertigt sein. Der Mikroprozessor kann beispielsweise auf einer Platine vergossen und in die Kapsel integriert sein. Die induktiven Kopplungselemente können auch Bestandteile modularer Baugruppen sein. Die Kapseln können in ebene Stirnflächen des drehbaren und des statischen Elements, welche sich an der Koppelstelle gegenüberliegen, eingesetzt oder integriert sein.

Das Einschliessen der induktiven Kopplungselemente in Kapseln hat den Vorteil, dass die elektrischen Koppelstellen gegen Schmutz und Korrosion geschützt sind. Dadurch wird eine deutliche Verbesserung der Produktionssicherheit erreicht und der Wartungsaufwand minimiert.

Im statischen Element kann ein Wechselrichter zur Umwandlung von Gleichspannung in Wechselspannung angeordnet sein, welche an ein induktives Kopplungselement leitbar ist. Im drehbaren Element kann ein Gleichrichter zur Umwandlung von Wechselspannung in Gleichspannung angeordnet sein, die von einem induktiven Kopplungselement zuleitbar ist.

Eine solche Anordnung hat einerseits den Vorteil, dass die Gleichspannung schnell als elektrische Versorgung des drehbaren Elements bereitgestellt wird und andererseits eine schnelle Leitung von Signalen über die induktive Koppelstelle möglich ist.

Vorzugsweise ist mindestens einem, vorzugsweise zwei induktiven Kopplungselementen des statischen Elements ein Modulator oder Demodulator zugeordnet. Besonders bevorzugt ist einem induktiven Kopplungselement des statischen Elements ein Modulator und einem anderen induktiven Kopplungselement des statischen Elements ein Demodulator zugeordnet. Vorzugsweise ist mindestens einem, vorzugweise zwei induktiven Kopplungselementen des drehbaren Elements ein Modulator oder Demodulator zugeordnet. Besonders bevorzugt ist einem induktiven Kopplungselement des drehbaren Elements ein Modulator und einem anderen induktiven Kopplungselement des drehbaren Elements ein Demodulator zugeordnet.

Über einen Modulator des statischen Elements kann beispielsweise ein Signal so aufbereitet werden, dass es über das induktive Kopplungselement an das drehbare Element übertragen werden kann. Beispielsweise kann eine Signalumwandlung von digital in analog erfolgen. Im Demodulator des drehbaren Elements kann dieses Signal dann wieder in ein digitales Signal konvertiert werden. Über den Modulator können digitale Signale in Wechselspannungssignale konvertiert werden, welche vom Kopplungselement des drehbaren Elements auf das Kopplungselement des statischen Elements übertagbar sind. Der Demodulator des Kopplungselements des statischen Elements kann das Wechselspannungssignal wieder in digitale Signale zurückwandeln. Diese Signale können dann beispielsweise in einem Prozessor des statischen Elements aufbereitet werden und im seriellen Datenstrom in einem Busprotokoll einer übergeordneten Prozesssteuerung, z.B. einer speicherprogrammierten Steuereinheit (SPS), zur Verfügung gestellt werden.

Eine solche Übertragung über ein Busprotokoll hat den Vorteil, dass sämtliche Steuersignale und die entsprechenden Rückmeldungen und Messdaten über nur ein einziges Kabel mit geringem Querschnitt geleitet werden können. Dies erhöht die Bewegungsfreiheit und Wartungsfreundlichkeit des Applikators. Eine solche Anordnung hat zusätzlich den Vorteil, dass die Signale weitestgehend störungsfrei übertragen werden können. Zudem ist eine gleichzeitige Übertragung von Signalen vom statischen Element auf das drehbare Element und umgekehrt möglich.

Mindestens zwei, vorzugsweise sämtliche induktiven Kopplungselemente des statischen Elements bzw. des drehbaren Elements sind konzentrisch angeordnet.

Durch konzentrisch angeordnete Kopplungselemente wird die Signalübertragung auch bei rotierenden Bewegungen des drehbaren Elements nicht eingeschränkt.

Das drehbare Element kann über mindestens ein Auslassventil mit einer Ventilnadel verfügen. Das Auslassventil ist vorzugsweise-über ein Magnetventil steuerbar.

Es ist ebenfalls denkbar, dass die Vorrichtung über zwei oder mehr Auslassventile verfügt. Die Magnetventile können dabei beispielsweise die Druckluft regeln, welche einen Pneumatikzylinder zur Steuerung des Nadelventils antreibt. Die entsprechenden Steuersignale können beispielsweise in der Elektronik im statischen Element generiert werden. Diese Steuersignale können mit Hilfe eines Modulators in analoge Signale umgewandelt werden und über die induktiven Kopplungselemente auf das drehbare Element übertragen werden. Der Demodulator im drehbaren Element konvertiert das analoge Signal wieder in digitale Steuersignale für die Auslassventile.
Vorzugsweise verfügt das drehbare Element über mindestens einen Sensor, welcher/welche die Position der Ventilnadel(n) erfasst/erfassen. Der/die Sensor(en) kann/können derart angeordnet sein, dass die Position(en) an die signal- und/oder datenverarbeitende Elektronik des drehbaren Elements übermittelbar ist/sind.

Es ist ebenfalls denkbar, dass der/die Sensor(en) über eine integrierte Elektronik verfügen, die bereits die Auswertung der Sensorsignale übernimmt.

Beispielsweise kann es sich bei den Sensoren um Abstandssensoren handeln. Typischerweise kommen dafür Hall-Sensoren oder induktive Sensoren in Frage. Dabei kann es sich um digitale oder analoge Abstandssensoren handeln. Die aktuelle Nadelposition kann beispielsweise durch Messung des Abstandes der Nadelposition zur Rückwand eines in der Vorrichtung integrierten pneumatischen Zylinders des Nadelantriebs erfolgen. Das Signal kann dann an einen, insbesondere im drehbaren Element integrierten, Prozessor übermittelt werden. Durch den Prozessor ist es möglich, den Messbereich der Abstandssensoren durch die Kombination aus Ansteuerpuls, sowie der gemessenen Nadelposition adaptiv zu kalibrieren. Das System kann so selbstständig erkennen, dass es sich bei der gemessenen Position um die erwartet Endlage der Ventilnadel, d.h. offen oder geschlossen, handelt.

Es ist auch möglich, dass der Sensor nicht nur die Endlage, sondern ebenfalls eine oder mehrere Zwischenpositionen der jeweiligen Nadel ermittelt und an die signal- und/oder datenverarbeitende Elektronik des drehbaren Elements übermittelt oder die Verarbeitung in einer integrierten Elektronik des Sensors erfolgt.

Die jeweiligen Nadelpositionen können somit direkt abgefragt werden.

Durch die Erfassung der Nadelposition können die Schaltverzögerung der Ventilnadel gemessen und die Einschaltpunkte entsprechend früher gesetzt werden. So ist es möglich, prozessbedingte Verzögerungen mit Hilfe der Steuerung automatisch zu kompensieren. Die Auftragsgenauigkeit wird verbessert.

Das statische Element kann mit einer Prozessteuerung kommunizierend verbindbar oder verbunden sein.

Bei der Prozesssteuerung kann es sich um eine PC-basierte Steuerung oder eine speicherprogrammierbare Steuereinheit (SPS) handeln. Es ist ebenfalls denkbar, dass die Steuerung die Robotersteuerung ist. Die Verbindung zum statischen Element kann beispielsweise über ein Bus-Interface oder eine Ethernet-Verbindung erfolgen. Eine Wireless-LAN-Verbindung wäre ebenfalls denkbar. Über die Prozesssteuerung kann auch die Energie zum Betreiben der Vorrichtung zur Verfügung gestellt werden und diese über dem Fachmann bekannten Verbindungsmöglichkeiten dem statischen Element zur Aufbereitung zur Verfügung gestellt werden.

Die signal- und/oder datenverarbeitende Elektronik des drehbaren Elements kann derart ausgestaltet sein, dass die Position(en) der Ventilnadel(n) in (ein) digitale(s) Signal(e) umwandelbar ist/sind und/oder (das) digitale Signal(e) in (ein) analoge(s) Wechselspannungssignal(e) konvertierbar ist/sind. Das/die analoge(n) Wechselspannungssignal(e) kann/ können einem induktiven Kopplungselement zugeleitet und/oder von diesem erhältlich sein.

Das hat den Vorteil, dass eine schnelle Signalübertragung über induktive Kopplungselemente erfolgen kann.

Vorzugsweise ist im drehbaren Element der Vorrichtung ein Speichermedium angeordnet, auf welchem die Schaltintervalle zum Öffnen und Schliessen der Ventilnadeln gespeichert sind.

Bei dem Speichermedium kann es sich beispielsweise um einen Halbleiterspeicher handeln, aber auch Datenträger, die keine Halbleiterspeicher sind, sind denkbar.

Die signal- und datenverarbeitende Elektronik des statischen Elements und/oder des drehbaren Elements kann derart gestaltet sein, dass diese die Abstandsensoren zur Abfrage der Nadelposition automatisch kalibriert, d.h. die Elektronik kann erkennen, welches Sensorsignal der gewünschten Endlage (offen/ geschlossen) der Nadelposition entspricht. Die signal- und datenverarbeitende Elektronik kann auch zur Überwachung und zum Messen der internen Reaktionszeiten des Applikators der Vorrichtung geeignet sein. Beispielsweise können die Messwerte dabei bereits im Applikator aufbereitet und danach der übergeordneten Prozesssteuerung zur Verfügung gestellt werden. So können beispielsweise der angeschlossenen Roboterarm oder eine Bewegungsmaschine die Ein- und Ausschaltpunkte automatisch korrigieren, um eine hochpräzise Lage des Fluids auf der Oberfläche zu ermöglichen.

Als Applikator wird die Einheit aus drehbarem Element und statischem Element verstanden.

Das drehbare Element und/oder das statische Element können Sensoren zur Messung des Drucks; Sensoren zur Messung der Temperatur; Heizelement(e) sowie Kombinationen davon umfassen.

Über die Drucksensoren ist die Dosiermechanik, welche das Fluid zum Auslassventil befördert, regulierbar. Die Temperatursensoren können beispielsweise die Temperatur des Applikators und/oder die Temperatur des/der Fluides/Fluide, welches/ welche dem Applikator zugeleitet werden, kontrollieren. Das Heizelement kann zum Heizen des Applikators aber auch anderer Elemente der Vorrichtung dienen. Es ist auch denkbar, dass ein Heizelement die Fluidleitung und/oder das Auslassventil beheizt.

Durch die Temperatursensoren und Heizelemente kann die Viskosität des Fluids so eingestellt werden, dass eine verbesserte Beförderung des Fluids zum Auslassventil gewährleistet ist. Über die Drucksensoren kann die Beförderung weiter optimiert werden. Zudem kann über den steuerbaren Druck-/Durchfluss des Fluids auch ein sehr gutes Auftragsergebnis erzielt werden.

Die erfindungsgemässe Vorrichtung ermöglicht die Applikation des Fluids unter hohen Drücken zwischen 20 und 250 bar, bevorzugt 100 bis 250 bar. Eine hohe Präzision beim Auftragen der Fluide bleibt trotzdem gewährleistet. Bei der Applikation von Lacken, beispielsweise in der Automobilindustrie, wird hingegen mit deutlich geringeren Drücken zwischen 2 und 3 bar gearbeitet.

Vorzugsweise umfassen das drehbare Element und das statische Element mindestens eine Leitung, bevorzugt mehrere Leitungen, zur Leitung von Druckluft und/oder des Fluids.

Die Leitungen können derart gestaltet sein, dass ein Einlasskanal zum Zuführen des Fluids zu einem Düsenkopf mit mindestens einer Düse im rotierenden Element und ein Rückführkanal zum Rückführen von Fluid von dem Düsenkopf vorhanden ist. Der Ausstoss des Fluids wird über die pneumatisch gesteuerten Ventilnadeln geregelt.

Der Einlasskanal und der Rückführkanal können derart gestaltet sein, dass eine Zirkulation des Fluids ermöglicht wird. Es ist auch denkbar, dass ein zusätzliches Zirkulationsventil in den Leitungen eingerichtet ist, welches die Zirkulation steuert. Die Drehbarkeit des drehbaren Elements wird durch die Leitungen nicht eingeschränkt. Vorzugsweise sind die Leitungen als Ringkanäle ausgestaltet. Die konzentrischen Kopplungselemente können in der Nähe dieser Ringkanäle angeordnet sein.

Der Vorteil dieser Gestaltung ist die unbegrenzte, freie Rotierbarkeit des drehbaren Teils.

Durch die erfindungsgemässe Vorrichtung wird auch bei hohen Drücken eine präzise und hochgenaue Auftragung der Fluide gewährleistet. Materialverlust wird dabei minimiert.

Ein weiterer Aspekt der Erfindung bezieht sich auf ein Verfahren zur Übertragung von Energie und Signalen in einer Vorrichtung zum Auftragen von Fluiden in einer Vorrichtung wie vorliegend beschrieben. Das Verfahren umfasst die Schritte:
- Übertragung von Energie zur Stromversorgung von einem statischen Element auf ein drehbares Element der Vorrichtung; und
- Übertragung von Signalen von dem statischen Element auf das drehbare Element und/oder von dem drehbaren Element auf das statische Element,
wobei die Strom- und Signalübertragung über konzentrisch angeordnete, induktive Kopplungselemente einer Koppelstelle der Vorrichtung erfolgen.

Für die Übertragung von Energie kann beispielsweise in dem statischen Element ein Wechselrichter für die Umwandlung von Gleichspannung in Wechselspannung angebracht sein, welche in einem Gleichrichter des drehbaren Elements wieder in Gleichspannung nach Übertragung über induktive Kopplungselemente umgewandelt wird.

Über einen Modulator des statischen Elements kann beispielsweise ein Signal so aufbereitet werden, dass es über das induktive Kopplungselement an das drehbare Element übertragen werden kann. Beispielsweise kann eine Signalumwandlung von digital in analog erfolgen. Im Demodulator des drehbaren Elements kann dieses

Signal dann wieder in ein digitales Signal konvertiert werden. Über den Modulator können digitale Signale in Wechselspannungssignale konvertiert werden, welche vom Kopplungselement des drehbaren Elements auf das Kopplungselement des statischen Elements übertagen werden. Der Demodulator des Kopplungselements des statischen Elements kann das Wechselspannungssignal wieder in digitale Signale zurückwandeln. Diese Signale können dann beispielsweise in der Elektronik des statischen Elements aufbereitet werden und im seriellen Datenstrom in einem Busprotokoll einer übergeordneten Prozesssteuerung, z.B. einer speicherprogrammierten Steuereinheit (SPS), zur Verfügung gestellt werden.

Durch konzentrisch angeordnete induktive Kopplungselemente erfolgt auch bei einer Drehbewegung des drehbaren Elements eine störungsfreie und präzise Signal- und/oder Datenübertragung.

Ein weiterer Aspekt der Erfindung betrifft ein Verfahren zum Schalten von mindestens einer Ventilnadel in einer Vorrichtung zum Auftragen von Fluiden, insbesondere wie vorliegend beschrieben. Das Verfahren umfasst die Schritte:
- Kalibrieren der Endlage der Ventilnadel(n),
- Ermitteln der Reaktionszeit zwischen einem an der Vorrichtung ankommenden Schaltbefehl und dem Erreichen der dem Schaltbefehl entsprechenden Endlage der Ventilnadel(n),
- Optional: Speichern der Werte zum Öffnen und/oder Schliessen der Ventilnadel(n), insbesondere für ein Wartungsintervall,
- Optional: Festlegen eines Wertebereichs als Toleranzfenster oder eines Grenzwertes der jeweiligen Endlage zur Überwachung von Verschleiss, und
- Bereitstellen der Reaktionszeit der Prozesssteuerung zur zeitlichen Koordination der Schaltbefehle.

Bei der Kalibrierung kann beispielsweise einem bestimmten Sensorsignal eine bestimmte Endlage, z.B. offen oder zu, der Ventilnadel zugeordnet werden. Damit ist eine direkte Ermittlung der Nadelposition möglich. Vorzugsweise wird dafür jede Ventilnadel mehrmals betätigt und der jeweilige Wert gespeichert. Dieser Wert bleibt für das Wartungsintervall gültig. Ein Verschleiss, insbesondere der Ventile, erzeugt eine Änderung des Werts und kann somit automatisch detektiert werden.

Die Ermittlung der Reaktionszeit zwischen dem an der Vorrichtung ankommenden Schaltbefehl und dem Erreichen der dem Schaltbefehl entsprechenden Endlage der Ventilnadel kann in der Prozesssteuerung erfolgen. Alternativ kann die Reaktionszeit in dem Prozessor der Vorrichtung ermittelt werden. Der Schaltbefehl wird üblicherweise aus der übergeordneten Prozesssteuerung zur Verfügung gestellt. Bei der Erstinbetriebnahme der Vorrichtung wird für jede Ventilnadel die Reaktionszeit zwischen dem an der Vorrichtung ankommenden Schaltbefehl und dem Erreichen der gewünschten Endlage der Ventilnadel ermittelt. Die Werte für das Öffnen/Schliessen jeder der Ventilnadeln können für ein Wartungsintervall hinterlegt werden. Die realen Werte können sich jedoch während der Betriebszeit durch Verschleiss ändern. Durch die Festlegung eines Wertebereichs als Toleranzfenster oder eines Grenzwertes der jeweiligen Endlage, kann der Verschleiss überwacht werden. So können beispielsweise Werte, die maximal 10 Prozent abweichen, noch innerhalb des Toleranzfensters liegen. Werte mit mehr als 10 % Abweichung liegen hingegen ausserhalb des Fensters und würden eine definierte Störmeldung ausgeben. Ausserdem können die Reaktionszeiten in der Prozesssteuerung und/oder Prozessor als Wert zur Verfügung gestellt werden, so dass diese zur Korrektur der Schaltbefehle verwendet werden können. Es ist möglich, dass alte Werte mit neuen Werten überschrieben werden können. Es ist aber auch denkbar, ältere Reaktionszeiten zu speichern. Bei jedem Schaltzyklus wird somit die Zeit zwischen dem Verlassen der einen Endlage und dem Erreichen der anderen Endlage gemessen. Überschreitet diese Zeit eine vorgegebene Zeit (z.B. 50 ms), so wird ein Störsignal ausgegeben.

Ein solches Verfahren ermöglicht eine Art Selbstdiagnose der Vorrichtung, was eine bedarfsorientierte Wartung der Vorrichtung ermöglicht. Dadurch werden Wartungskosten erheblich gesenkt.

Ein weiterer Aspekt der Erfindung betrifft ein Verfahren zum Umrüsten von elektrischen Koppelstellen in einer Vorrichtung zum Auftragen von Fluiden, insbesondere einer Vorrichtung wie vorliegend beschrieben. Das Verfahren umfasst den Schritt:
- Austausch von Schleifkontakten gegen induktive Kopplungselemente.

Das hat den Vorteil, dass in bestehende Vorrichtungen die störanfälligen Schleifkontakte kostengünstig und ohne grosse bauliche Veränderungen durch eine kontaktlose Koppelstelle mit geringen Wartungsaufwand und langer Lebensdauer ersetzt werden können.

Die Erfindung betrifft auch die Verwendung einer Koppelstelle mit induktiven Kopplungselementen für die Signalübertragung einer Nadelposition eines Ventils in einer Vorrichtung zum Auftragen von Fluiden.

Durch die Verwendung einer solchen Koppelstelle kann die Nadelposition des Ventils präzise und schnell erfasst werden. Durch die Erfassung der Nadelposition in Kombination mit den Schaltsignalen können die Schaltverzögerung der Ventilnadel gemessen, ausgewertet und die Ein- bzw. Ausschaltpunkte entsprechend früher gesetzt werden. So ist es möglich prozessbedingte Verzögerungen in der Steuerung automatisch zu kompensieren. Die Auftragsgenauigkeit wird verbessert.

Anhand der Figuren, welche lediglich Ausführungsbeispiele darstellen, wird die Erfindung im Folgenden näher erläutert. Es zeigen:
- Figur 1:: Schematische Ansicht der erfindungsgemässen Vorrichtung
- Figur 2:: Schaltungsanordnung der Vorrichtung gemäss Figur 1.
- Figur 3:: Verlauf des Fluids in der Vorrichtung gemäss Figur 2.

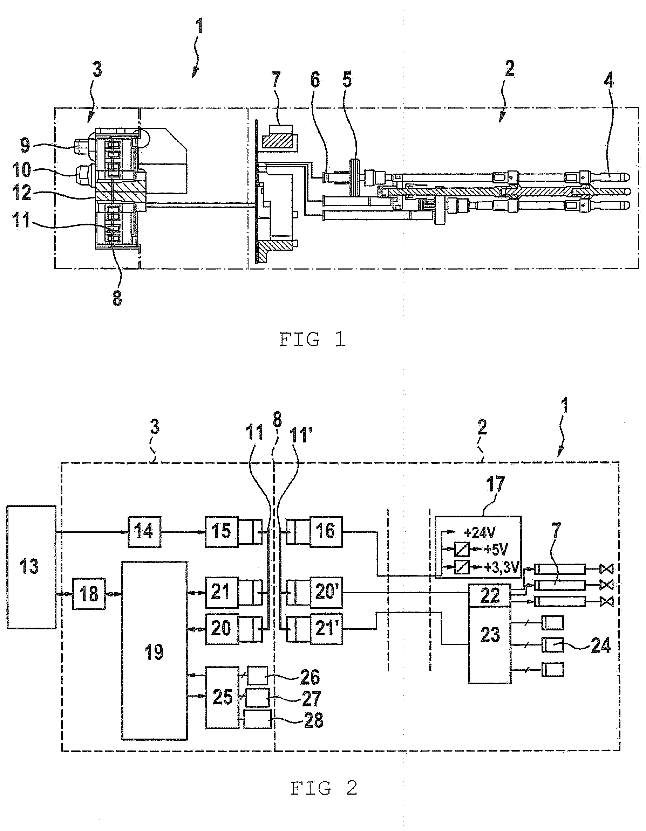

Die in Figur 1 dargestellte Vorrichtung 1 ist zum Auftragen von Fluiden geeignet. Die Vorrichtung 1 besteht im Wesentlichen aus einem drehbaren Element 2 und einem statischen Element 3. Die Vorrichtung 1 eignet sich zum Anbringen an einen Roboterarm, wobei eine Verbindung über eine Stirnfläche 12 des statischen Elements 3 erfolgen kann, beispielsweise durch Verschraubung. Das statische Element 3 ist über eine Koppelstelle 8 an das drehbare Element 2 angeordnet. Die Koppelstelle 8 verfügt sowohl im drehbaren Element 2 als auch im statischen Element 3 über induktive Kopplungselemente 11. Bei den induktiven Kopplungselementen 11 handelt es sich um Flachspulen mit Ferritkernen. Die Flachspulen können derart in den Elementen angeordnet sein, dass maximal ein Durchmesser von 84 mm und eine Bauhöhe von 22 mm zur Integration von drei Flachspulen notwendig sind. Typischerweise liegen sich die induktiven Kopplungselemente kontaktlos mit 2 mm Abstandgegenüber.

Über den Anschluss 9 wird das statische Element 3 mit Energie versorgt. Das statische Element 3 ist über eine Feldbus-Verbindung 10 mit einer übergeordneten Prozessteuerung (nicht gezeigt) verbindbar. Über die induktiven Kopplungselemente 11 kann eine Energieversorgung des drehbaren Elements 2 erfolgen. Das drehbare Element 2 verfügt über drei Nadelventile 4, welche von Magnetventilen 7 angesteuert werden. Ein Sensor 6 registriert die Position der Nadel der Nadelventile. Bei dem Sensor 6 kann es sich z.B. um einen Sensor, der aus zwei Hall-Elementen zur Erzeugung von vier binären Signalen gebildet sein kann, handeln, oder auch um einen induktiven Sensor, mit dessen Hilfe die genaue Nadelposition zur Weiterverarbeitung in der datenverarbeitenden Elektronik ermittelt wird.

Figur 2 zeigt die Schaltanordnung der in Figur 1 gezeigten Vorrichtung 1 und einzelne Elemente des drehbaren Elements 2 und des statischen Elements 3. Eine übergeordnete Prozessteuerung 13 ist mit einer Powerspule 14 des statischen Elements 3 verbunden und versorgt so das statische Element 3 mit Energie. Das Gleichspannungssignal für die Energieversorgung wird an der Powerspule 14 des statischen Elements 3 über einen Wechselrichter 15in Wechselspannung umgewandelt und an ein induktives Kopplungselement 11 des statischen Elements 3 übertragen. Über die Koppelstelle 8 wird das Wechselspannungssignal für die Leistungsversorgung an das korrespondierende induktive Kopplungselement 11' des drehbaren Elements 2 übertragen. Die Powerspule 17 des drehbaren Elements 2 kann nun über einen Gleichrichter 16 das Wechselspannungssignal wieder in ein Gleichspannungssignal umwandeln.

Die übergeordnete Prozesssteuerung 13 liefert auch den relevanten Datensatz für die Steuerung der Magnetventile 7 und der Heizung 27. Die Daten werden an ein Bus-Interface 18 übertragen.

Über den Prozessor 19 des statischen Elements 3 werden die Signale dem Modulator 20 zur Verfügung gestellt. Der Modulator 20 wandelt die digitalen Steuersignale in analoge Signale um. Die analogen Signale werden über ein weiteres induktives Kopplungselement 11 des statischen Elements 3 über die Koppelstelle 8 an das korrespondierende induktive Kopplungselement 11' des drehbaren Elements 2 übermittelt. Das Signal wird im Demodulator 21' des drehbaren Elements 2 umgewandelt und beispielsweise über den Prozessor 22/23 an die Magnetventile 7 geleitet. Die Magnetventile 7 ihrerseits steuern die Druckluftzufuhr für einen pneumatischen Zylinder (nicht gezeigt), der wiederum die Position der Ventilnadeln 24 steuert. Die Position der Ventilnadeln 24 werden über Sensoren (Fig 1, 6) ermittelt und das Signal kann dann über den Prozessor 22/23 an einen Modulator 20' des drehbaren Elements 2 geleitet werden. Im Modulator 20' des drehbaren Elements 2 wird das Signal so aufbereitet, dass es über ein induktives Kopplungselements 11' des drehbaren Elements 2 an das induktive Kopplungselements 11 des statischen Elements 3 übertagbar ist. Dann wird das Signal im Demodulator 21 des statischen Elements wieder zurückgewandelt. Das Signal wird im Prozessor 19 verarbeitet und über das Bus-Interface 18 an die übergeordnete Prozesssteuerung 13 geleitet. Über zusätzliche Temperatursensoren 26 kann die Betriebstemperatur eingestellt und kontrolliert werden. Drucksensoren 27 regeln über die Prozesssteuerung die Dosiermechanik, über welche das Fluid zum Auslassventil befördert wird. Des Weiteren können im statischen Element 3 zusätzliche Heizelemente 28 zum Heizen beispielsweise des Applikators (nicht gezeigt) oder zum Heizen der Fluidleitung angeordnet sein. Die entsprechenden Signale können über einen Analog-adapter 25 verarbeitet werden und einerseits an den Prozessor 19 des statischen Elements 3 übermittelt werden und anderseits vom Prozessor 19 Signale zur Regelung erhalten.

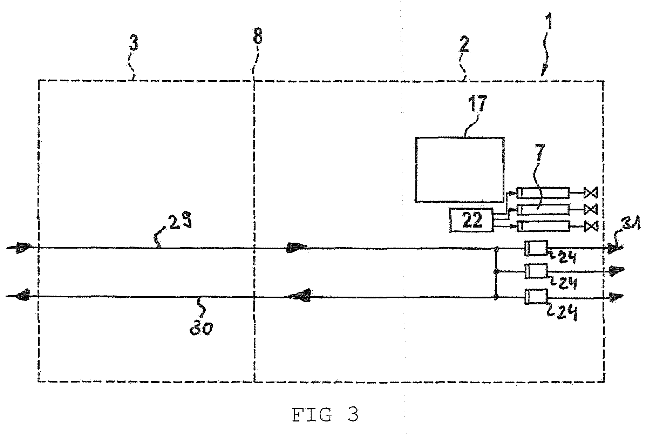

Figur 3 zeigt den Verlauf des Fluids innerhalb der Vorrichtung. Nicht gezeigte Elemente aus Figur 2 wurden der Übersicht halber weggelassen.

Über einen Einlasskanal 29 erfolgt das Zuführen des Fluids zu einem Düsenkopf mit drei Düsen mit steuerbaren Ventilnadeln 24. Über einen Rückführkanal 30 erfolgt das Rückführen des Fluid von dem Düsenkopf. Die Zirkulation des Fluids wird damit ermöglicht. Der Ausstoss 31 des Fluids wird über die pneumatisch gesteuerten Ventilnadeln 24 geregelt. Die Magnetventile 7 ihrerseits steuern die Druckluftzufuhr für einen pneumatischen Zylinder (nicht gezeigt), der wiederum die Position der Ventilnadeln 24 steuert.

## Patentansprüche

1. Vorrichtung (1) zum Auftragen von Fluiden, zum Anbringen als Werkzeug an einen Roboterarm, umfassend ein statisches Element (3), ein drehbares Element (2) und eine Koppelstelle (8), wobei die Koppelstelle (8) das statische Element (3) und das drehbare Element (2) drehbar miteinander verbindet, **dadurch gekennzeichnet, dass** die Koppelstelle (8) sowohl auf der Seite des statischen Elements (3) als auch auf der Seite des drehbaren Elements (2) über induktive Kopplungselemente (11, 11') verfügt, die derart angeordnet sind, dass eine induktive Energie- und/oder Signalübertragung über die Koppelstelle (8) hinweg ermöglicht ist, wobei das induktive Kopplungselement (11) des statischen Elements (3) und das induktive Kopplungselement (11') des drehbaren Elements (2) relativ zueinander drehbar um eine gemeinsame Achse angeordnet sind, wobei mindestens zwei, vorzugsweise sämtliche induktiven Kopplungselemente (11, 11') des statischen Elements (3) bzw. des drehbaren Elementes (2) konzentrisch angeordnet sind.

2. Vorrichtung (1) nach Anspruch 1, wobei
- das statische Element (3) eine signal- und/oder datenverarbeitende Elektronik zur Umwandlung von digitalen Signalen in analoge Signale und/oder analogen Signalen in digitale Signale umfasst; und/oder
- das drehbare Element (2) eine signal- und/oder datenverarbeitende Elektronik zur Umwandlung von digitalen Signalen in analoge Signale und/oder analogen Signalen in digitale Signale umfasst.

3. Vorrichtung (1) nach Anspruch 2, wobei die signal- und/oder datenverarbeitende Elektronik in dem statischen Element (3) und dem drehbaren Element (2) derart ausgebildet und aufeinander abgestimmt sind, dass eine serielle Übertragung von Signalen und/oder Daten ermöglicht ist.

4. Vorrichtung (1) nach einem der vorherigen Ansprüche, wobei die Übertragung von Signalen zwischen statischem Element (3) und drehbaren Element (2) bidirektional ermöglicht ist, insbesondere über jeweils miteinander korrespondierende Kopplungselemente (11, 11') im statischen Element (3) und drehbaren Element (2) für jeweils nur eine Übertragungsrichtung.

5. Vorrichtung (1) nach einem der vorherigen Ansprüche, wobei
- im statischen Element (3) ein Wechselrichter (15) zur Umwandlung von Gleichspannung in Wechselspannung angeordnet ist, welche an ein induktives Kopplungselement (11) leitbar ist; und/oder
- im drehbaren Element (2) ein Gleichrichter (16) zur Umwandlung von Wechselspannung in Gleichspannung angeordnet ist, die von einem induktiven Kopplungselement (11') zuleitbar ist.

6. Vorrichtung (1) nach einem der vorherigen Ansprüche, wobei
- mindestens einem, vorzugsweise zwei induktiven Kopplungselementen (11) des statischen Elements (2) ein Modulator (20) oder Demodulator (21) zugeordnet ist; wobei besonders bevorzugt einem induktiven Kopplungselement (11) des statischen Elements (2) ein Modulator (20) und einem anderen induktiven Kopplungselement (11) des statischen Elements (2) ein Demodulator (21) zugeordnet ist.
- und/oder
- wobei mindestens einem, vorzugweise zwei induktiven Kopplungselementen (11') des drehbaren Elements (2) ein Modulator (20') oder Demodulator (21') zugeordnet ist; wobei besonders bevorzugt einem induktiven Kopplungselement (11') des drehbaren Elements (2) ein Modulator (20') und einem anderen induktiven Kopplungselement (11') des drehbaren Elements (2) ein Demodulator (21') zugeordnet ist.

7. Vorrichtung (1) nach einem der vorherigen Ansprüche, wobei das drehbare Element (2) über mindestens ein Auslassventil mit einer Ventilnadel (24) verfügt, wobei das Auslassventil vorzugsweise über ein Magnetventil (7) steuerbar ist.

8. Vorrichtung (1) nach Anspruch 7, wobei das drehbare Element (2) über mindestens einen Sensor (6) verfügt, welcher/welche die Position der Ventilnadel(n) (24) erfasst/erfassen und derart angeordnet ist/sind, dass die Position(en) an die signal- und/oder datenverarbeitende Elektronik des drehbaren Elements (2) übermittelbar ist/sind.

9. Vorrichtung (1) nach einem der vorherigen Ansprüche, wobei das statische Element (3) mit einer Prozessteuerung (13) kommunizierend verbindbar oder verbunden ist.

10. Vorrichtung (1) nach einem der Ansprüche 7 bis 9, wobei die signal- und/oder datenverarbeitende Elektronik des drehbaren Elements (2) derart ausgestaltet ist, dass die Position(en) der Ventilnadel(n) (24) in (ein) digitale(s) Signal(e) umwandelbar ist/sind und/oder (das) digital(e) Signal(e) in (ein) analoge(s) Wechselspannungssignal(e) konvertierbar ist/sind, das/die einem induktiven Kopplungselement (11, 11') zuleitbar und/oder von diesem erhältlich ist/sind.

11. Vorrichtung (1) nach einem der vorherigen Ansprüche, wobei im drehbaren Element (2) ein Speichermedium angeordnet ist, auf welchem die Schaltintervalle zum Öffnen und/oder Schliessen der Ventilnadel(n) (24) gespeichert sind.

12. Verfahren zur Übertragung von Energie und Signalen in einer Vorrichtung (1) zum Auftragen von Fluiden gemäss einem der Ansprüche 1 bis 11, umfassend die Schritte:
- Übertragung von Energie zur Stromversorgung von einem statischen Element (3) über eine Koppelstelle (8) auf ein drehbares Element (2) der Vorrichtung (1); und
- Übertragung von Signalen von dem statischen Element (3) über die Koppelstelle (8) auf das drehbare Element (2) und/oder von dem drehbaren Element (2) über die Koppelstelle (8) auf das statische Element (3),
**dadurch gekennzeichnet, dass** die Strom- und Signalübertragung über konzentrisch angeordnete, induktive Kopplungselemente (11, 11') einer Koppelstelle (8) der Vorrichtung (1) erfolgen.

13. Verfahren zum Schalten von mindestens einer Ventilnadel (24) in einer Vorrichtung (1) zum Auftragen von Fluiden nach einem der Ansprüche 1 bis 11, umfassend die Schritte:
- Kalibrierung der Endlage der Ventilnadel(n) (24),
- Ermitteln der Reaktionszeit zwischen einem an der Vorrichtung (1) ankommenden Schaltbefehl und dem Erreichen der dem Schaltbefehl entsprechenden Endlage der Ventilnadel(n) (24),
- Optional: Speichern der Werte zum Öffnen und/oder Schliessen der Ventilnadel(n) (24), insbesondere für ein Wartungsintervall,
- Optional: Festlegen eines Wertebereichs als Toleranzfenster oder eines Grenzwertes der jeweiligen Endlage zur Überwachung von Verschleiss, und
- Bereitstellen der Reaktionszeiten in der Prozesssteuerung zur zeitlichen Koordination der Schaltbefehle.

14. Verfahren zum Umrüsten von elektrischen Koppelstellen (8) in einer Vorrichtung (1) zum Auftragen von Fluiden gemäss einem der Ansprüche 1 bis 11, umfassend den Schritt:
- Austausch von Schleifkontakten gegen induktive Kopplungselemente (11, 11').

## Claims

1. A device (1) for applying fluids, for attachment as a tool to a robot arm, comprising a static element (3), a rotatable element (2) and a coupling point (8), the coupling point (8) rotatably connecting the static element (3) and the rotatable element (2) to each other, **characterised in that** the coupling point (8) has inductive coupling elements (11, 11') which are arranged in such a way that inductive energy and/or signal transmission is possible across the coupling point (8), wherein the inductive coupling element (11) of the static element (3) and the inductive coupling element (11') of the rotatable element (2) are arranged rotatably relative to one another about a common axis, wherein at least two, preferably all, inductive coupling elements (11, 11') of the static element (3) or of the rotatable element (2) are arranged concentrically.

2. Device (1) according to claim 1, wherein
- the static element (3) comprises signal and/or data processing electronics for converting digital signals into analogue signals and/or analogue signals into digital signals; and/or
- the rotatable element (2) comprises signal- and/or data-processing electronics for converting digital signals into analogue signals and/or analogue signals into digital signals.

3. Device (1) according to claim 2, wherein the signal- and/or data-processing electronics in the static element (3) and the rotatable element (2) are designed and matched to one another in such a way that serial transmission of signals and/or data is possible.

4. Device (1) according to one of the previous claims, wherein the transmission of signals between static element (3) and rotatable element (2) is enabled bidirectionally, in particular via mutually corresponding coupling elements (11, 11') in the static element (3) and rotatable element (2) for only one transmission direction in each case.

5. Device (1) according to one of the previous claims, wherein
- an inverter (15) is arranged in the static element (3) for converting DC voltage into AC voltage which can be conducted to an inductive coupling element (11); and/or
- a rectifier (16) is arranged in the rotatable element (2) for converting AC voltage into DC voltage which can be fed from an inductive coupling element (11').

6. Device (1) according to one of the previous claims, wherein
- a modulator (20) or demodulator (21) is associated with at least one, preferably two, inductive coupling elements (11) of the static element (2); wherein a modulator (20) is particularly preferably associated with one inductive coupling element (11) of the static element (2) and a demodulator (21) is associated with another inductive coupling element (11) of the static element (2).
- and/or
- wherein a modulator (20') or demodulator (21') is associated with at least one, preferably two inductive coupling elements (11') of the rotatable element (2); wherein a modulator (20') is particularly preferably associated with one inductive coupling element (11') of the rotatable element (2) and a demodulator (21') is associated with another inductive coupling element (11') of the rotatable element (2).

7. Device (1) according to any one of the preceding claims,
wherein the rotatable element (2) has at least one outlet valve with a valve needle (24), wherein the outlet valve is preferably controllable via a solenoid valve (7).

8. Device (1) according to claim 7, wherein the rotatable element (2) has at least one sensor (6) which detects the position of the valve needle(s) (24) and is/are arranged in such a way that the position(s) can be transmitted to the signal- and/or data-processing electronics of the rotatable element (2).

9. Device (1) according to any one of the preceding claims,
wherein the static element (3) is communicatively connectable or connected to a process control (13).

10. Device (1) according to any one of claims 7 to 9, wherein the signal- and/or data-processing electronics of the rotatable element (2) are designed in such a way, that the position(s) of the valve needle(s) (24) is/are convertible into (a) digital signal(s) and/or (the) digital signal(s) is/are convertible into (an) analogue AC signal(s) which is/are feedable to and/or obtainable from an inductive coupling element (11, 11').

11. Device (1) according to one of the previous claims, wherein a storage medium is arranged in the rotatable element (2), on which the switching intervals for opening and/or closing the valve needle(s) (24) are stored.

12. A method of transmitting power and signals in a fluid application device (1) according to any one of claims 1 to 11, comprising the steps of:
- transmitting energy for power supply from a static element (3) via a coupling point (8) to a rotatable element (2) of the device (1); and
- transmitting signals from the static element (3) via the coupling point (8) to the rotatable element (2) and/or from the rotatable element (2) via the coupling point (8) to the static element (3),
**characterised in that** the current and signal transmission is effected via concentrically arranged inductive coupling elements (11, 11') of a coupling point (8) of the device (1) .

13. A method of switching at least one valve needle (24) in a fluid application device (1) according to any one of claims 1 to 11, comprising the steps of:
- calibrating the end position of the valve needle(s) (24),
- determining the reaction time between a switching command arriving at the device (1) and the valve needle(s) (24) reaching the end position corresponding to the switching command,
- optionally: storing the values for opening and/or closing the valve needle(s) (24), in particular for a maintenance interval,
- optionally: defining a value range as a tolerance window or a limit value of the respective end position for monitoring wear, and
- Providing the reaction times in the process control for the temporal coordination of the switching commands.

14. A method of converting electrical coupling elements (8) in a fluid application device (1) according to any one of claims 1 to 11, comprising the step of:
- replacing sliding contacts with inductive coupling elements (11, 11').

## Revendications

1. Dispositif (1) d'application de fluide destiné à être fixé en tant qu'outil à un bras de robot, comprenant un élément statique (3), un élément rotatif (2) et un de couplage (8), le point de couplage (8) interconnectant de manière rotative l'élément statique (3) et l'élément rotatif (2), **caractérisé en ce que** le point de couplage (8) comporte des éléments d'accouplement inductifs (11, 11') qui sont disposés de telle sorte qu'une transmission d'énergie et/ou de signaux inductifs est possible à travers le point de couplage (8), l'élément d'accouplement inductif (11) de l'élément statique (3) et l'élément d'accouplement inductif (11') de l'élément rotatif (2) étant disposés de manière à pouvoir tourner l'un par rapport à l'autre autour d'un axe commun, au moins deux, de préférence tous les éléments d'accouplement inductif (11, 11') de l'élément statique (3) ou de l'élément rotatif (2) sont disposés de manière concentrique.

2. Dispositif (1) selon la revendication 1, dans lequel
- l'élément statique (3) comprend une électronique de traitement de signaux et/ou des dates pour convertir des signaux numériques en signaux analogiques et/ou des signaux analogiques en signaux numériques; et/ou
- l'élément rotatif (2) comprend une électronique de traitement de signaux et/ou des dates pour convertir des signaux numériques en signaux analogiques et/ou des signaux analogiques en signaux numériques.

3. Dispositif (1) selon la revendication 2, dans lequel l'électronique de traitement des signaux et/ou des dates dans l'élément statique (3) et l'élément rotatif (2) est conçue et adaptée l'une à l'autre de telle sorte qu'une transmission en série des signaux et/ou des dates est possible.

4. Dispositif (1) selon l'une quelconque des revendications précédentes, dans lequel la transmission de signaux entre l'élément statique (3) et l'élément rotatif (2) est rendue possible de manière bidirectionnelle, en particulier par l'intermédiaire d'éléments de couplage (11, 11') respectifs se correspondant mutuellement dans l'élément statique (3) et l'élément rotatif (2) pour une seule direction de transmission dans chaque cas.

5. Dispositif (1) selon l'une des revendications précédentes, dans lequel
- dans l'élément statique (3), un onduleur (15) est disposé pour convertir la tension continue en tension alternative, qui peut être conduite à un élément d'accouplement inductif (11) ; et/ou
- un redresseur (16) est disposé dans l'élément rotatif (2) pour convertir la tension alternative en tension continue qui peut être alimentée par un élément d'accouplement inductif (11').

6. Dispositif (1) selon l'une quelconque des revendications précédentes, dans lequel
- un modulateur (20) ou un démodulateur (21) est associé à au moins un, de préférence deux, éléments d'accouplement inductifs (11) de l'élément statique (2) ; dans lequel un modulateur (20) est associé de manière particulièrement préférée à un élément d'accouplement inductif (11) de l'élément statique (2) et un démodulateur (21) est associé à un autre élément d'accouplement inductif (11) de l'élément statique (2).
- et/ou
- dans lequel un modulateur (20') ou un démodulateur (21') est associé à au moins un, de préférence deux, éléments d'accouplement inductifs (11') de l'élément rotatif (2) ; dans lequel un modulateur (20') est associé de manière particulièrement préférée à un élément d'accouplement inductif (11') de l'élément rotatif (2) et un démodulateur (21') est associé à un autre élément d'accouplement inductif (11') de l'élément rotatif (2).

7. Dispositif (1) selon l'une quelconque des revendications précédentes, dans lequel l'élément rotatif (2) présente au moins une vanne de sortie avec une aiguille de vanne (24), la vanne de sortie étant de préférence commandable par une électrovanne (7).

8. Dispositif (1) selon la revendication 7, dans lequel l'élément rotatif (2) présente au moins un capteur (6) qui détecte la position du ou des aiguilles de vanne (24) et est disposé de telle sorte que la ou les positions peuvent être transmises à l'électronique de traitement des signaux et/ou des dates de l'élément rotatif (2).

9. Appareil (1) selon l'une quelconque des revendications précédentes, dans lequel l'élément statique (3) est connectable ou connecté de manière communicante à un contrôleur de processus (13).

10. Dispositif (1) selon l'une quelconque des revendications 7 à 9, dans lequel l'électronique de traitement des signaux et/ou des dates de l'élément rotatif (2) est conçue de telle sorte, que la (les) position(s) de la (des) aiguille(s) de vanne (24) est (sont) convertible(s) en un (des) signal(s) numérique(s) et/ou que le (les) signal(s) numérique(s) est (sont) convertible(s) en un (des) signal(s) analogique(s) de courant alternatif, qui peut (peuvent) être amené(s) à et/ou obtenu(s) d'un élément d'accouplement inductif (11, 11').

11. Dispositif (1) selon l'une des revendications précédentes, dans lequel un support de mémoire est disposé dans l'élément rotatif (2), sur lequel sont mémorisés les intervalles de commutation pour l'ouverture et/ou la fermeture du ou des aiguilles de vanne (24).

12. Procédé de transmission de puissance et de signaux dans un dispositif d'application de fluide (1) selon l'une quelconque des revendications 1 à 11, comprenant les étapes suivantes:
- Transfert d'énergie pour l'alimentation en énergie d'un élément statique (3) via un point de couplage (8) à un élément rotatif (2) du dispositif (1) ; et
- transmettre des signaux de l'élément statique (3) via le point d'accouplement (8) à l'élément rotatif (2) et/ou de l'élément rotatif (2) via le point de couplage (8) à l'élément statique (3),
**caractérisé en ce que** le courant et le signal sont transmis par des éléments de accouplement inductifs (11, 11') disposés de manière concentrique d'un point de couplage (8) du dispositif (1).

13. Procédé de commutation d'au moins une aiguille de vanne (24) dans un dispositif d'application de fluide (1) selon l'une quelconque des revendications 1 à 11, comprenant les étapes suivantes:
- Calibrer la position finale de la ou des aiguilles de vanne (24),
- déterminer le temps de réaction entre une commande de commutation arrivant au dispositif (1) et le ou les aiguilles de vanne (24) atteignant la position finale correspondant à la commande de commutation,
- optionnellement : mémoriser les valeurs d'ouverture et/ou de fermeture du ou des pointeaux de vanne (24), notamment pour un intervalle de maintenance,
- optionnellement : définition d'une plage de valeurs comme une fenêtre de tolérance ou une valeur limite de la position finale respective pour surveiller l'usure, et
- fournir les temps de réaction dans la commande du processus pour la coordination temporelle des ordres de commutation.

14. Procédé de conversion d'éléments de couplage électrique (8) dans un dispositif d'application de fluide (1) selon l'une quelconque des revendications 1 à 11, comprenant l'étape consistant à:
- Remplacement des contacts glissants par des éléments d'accouplement inductifs (11, 11').
